# FASCICULE DE BREVET EUROPEEN

(11) **EP 0 976 487 B1**
(45) Date de publication et mention de la délivrance du brevet: **18.06.2003**
(21) Numéro de dépôt: 99401709.3
(22) Date de dépôt: 08.07.1999
(51) Int. Cl.: B23K 26/06, B23K 26/00

(54) **Dispositif d'usinage par laser excimère de trous ou de formes à profil variable**
Vorrichtung zur Bearbeitung von Löchern oder von Formen mit veränderlichem Profil mittels eines Excimerlasers
Device for excimer laser machining of holes or forms with variable shapes

(30) Priorité: 30.07.1998 FR 9809742
(43) Date de publication de la demande: 02.02.2000
(73) Titulaire: Snecma Moteurs, 75015 Paris (FR)
(72) Inventeur: Fournier, Gérard Albert Félix, 77930 Fleury en Biere (FR); Vigneau, Joel Olivier Alfred Abel, 91750 Champcueil (FR)

(56) Documents cités:
- EP-A- 0 729 827
- WO-A-93/15911
- FR-A- 2 637 524
- US-A- 5 237 148
- US-A- 5 739 502

## Description

L'invention concerne un dispositif d'usinage par laser excimère de trous ou de formes à profil variable dans une pièce mécanique, conformément aux préambules des revendications 1 et 2 (voir, par exemple, EP-A-0 729 827). Elle s'applique notamment en aéronautique au perçage de trous de refroidissement des aubes et de la chambre de combustion d'un turbomoteur.

Pour usiner des trous à profil variable, il est connu d'utiliser une technique de perçage par électroérosion, appelée technique EDM (en anglais Electro-Discharge Machining). Cette technique présente l'inconvénient majeur de nécessiter l'utilisation d'une électrode dont la forme est identique à celle requise pour le trou à percer, cette électrode devant elle-même être usinée. En outre ce procédé d'usinage est trop lent.

Il est également connu du brevet FR 2 637 524 de percer des trous à profil variable en utilisant un faisceau laser et des moyens de rotation du faisceau suivant la génératrice d'un cône. Le trou réalisé a la forme d'un entonnoir mais les dimensions de la partie conique et la longueur de la partie cylindrique située en aval de la partie conique sont difficilement maîtrisables industriellement.

Le brevet EP A 0729 827 décrit un dispositif d'usinage de trous à profil variable en utilisant un laser excimère et un écran constitué de deux sous-masques comportant des ouvertures. Les trous à profil variable sont obtenus en faisant varier la surface de recouvrement des deux sous masques. Cependant, ce dispositif ne permet pas de réaliser des trous à profil non axisymétrique. Le but de l'invention est de réaliser un dispositif d'usinage de trous ou de formes à profil variable permettant de pallier aux inconvénients des dispositifs connus.

Pour cela, l'invention concerne un dispositif d'usinage utilisant un laser excimère, l'usinage étant effectué sans déplacement relatif du faisceau laser par rapport à la pièce mécanique. Le faisceau émis par le laser excimère est mis en forme par interposition, dans une partie non focalisée de la trajectoire du faisceau, d'un diaphragme ou d'un écran muni d'une ouverture de forme prédéterminée de façon à ne laisser passer qu'un faisceau ayant une section de la dimension et de la forme voulues.

Selon l'invention, le dispositif d'usinage par laser excimère d'un trou ou d'une forme à profil et à section variable dans une pièce mécanique, comprenant un laser excimère qui délivre un faisceau sous forme d'impulsions, un dispositif de focalisation dudit faisceau, et un écran muni d'une ouverture prédéterminée, interposé entre le laser excimère et le dispositif de focalisation est caractérisé en ce que l'écran est mobile dans un plan perpendiculaire à la direction de propagation du faisceau laser, le dispositif comprenant aussi des moyens de commande pour déplacer l'écran dans ledit plan, les déplacements de l'écran étant effectués en temps réel pendant l'usinage du trou ou de la forme dans la pièce mécanique.

L'invention concerne également un dispositif d'usinage par laser excimère d'un trou ou d'une forme à profil et à section variable dans une pièce mécanique, ce dispositif comprenant un laser excimère qui délivre un faisceau sous forme d'impulsions, un dispositif de focalisation dudit faisceau, et un diaphragme muni de volets à ouverture variable, interposé entre le laser excimère et le dispositif de focalisation, caractérisé en ce que le dispositif comprend des moyens de commande pour ouvrir le diaphragme, ces moyens de commande agissant de manière indépendante sur chaque volet dudit diaphragme.

D'autres particularités ou avantages de l'invention apparaîtront clairement dans la suite de la description donnée à titre d'exemple non limitatif et faite en regard des figures annexées qui représentent :
- la figure 1, un schéma d'un premier exemple d'un dispositif permettant de percer des trous cylindriques ou de forme, selon l'invention,
- la figure 2, un schéma d'un deuxième exemple d'un dispositif permettant de percer des trous à profil variable, selon l'invention,
- les figures 3a et 3b, deux exemples de trous à profil variable obtenus avec une fermeture régulière du diaphragme,
- les figures 4a et 4b, deux exemples de trous à profil variable obtenus avec un pilotage indépendant de plusieurs volets du diaphragme ou par déplacement du centrage de l'écran.

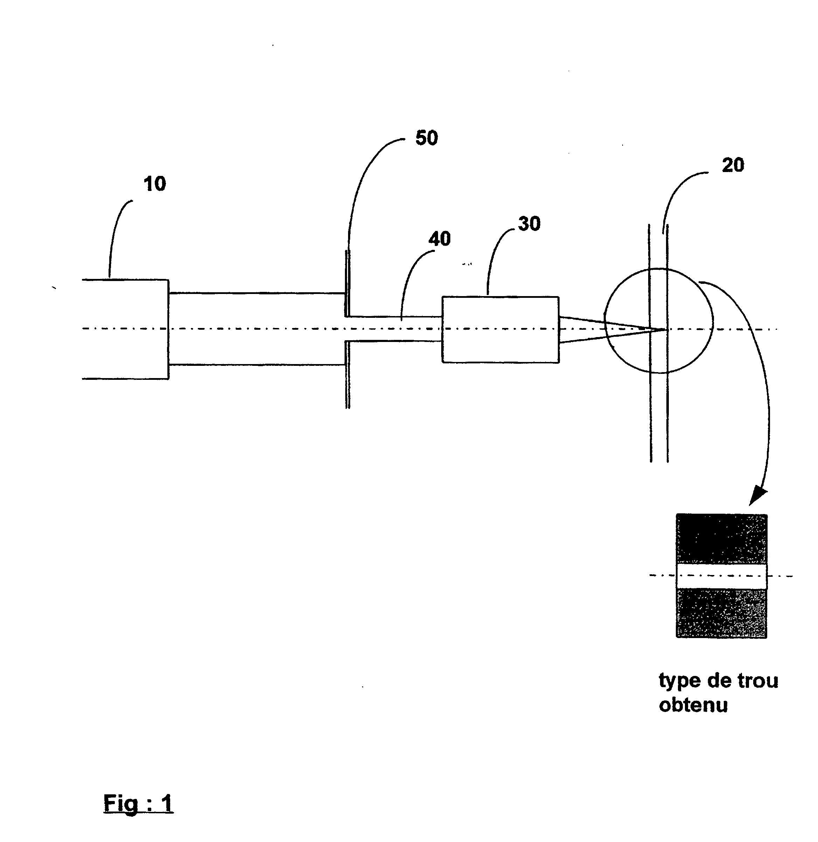

Le dispositif représenté sur la figure 1 comporte une source 10 de rayon laser excimère émettant un faisceau de rayonnement sous forme d'impulsions en direction d'une pièce mécanique 20 à usiner, un dispositif de focalisation 30 du faisceau laser monté sur le trajet du faisceau 40 de manière à focaliser le faisceau sur la pièce à usiner et un écran ou un diaphragme 50 interposé entre la source 10 et le dispositif de focalisation 30. L'écran est muni d'une ouverture de forme prédéterminée, disposée dans la partie non focalisée de la trajectoire du faisceau laser 40. L'interposition d'un écran sur la trajectoire du faisceau avant sa focalisation permet d'occulter une partie de ce faisceau et de mettre en forme la partie non occultée du faisceau de façon à ne laisser passer qu'un faisceau ayant une section de la dimension et de la forme voulues.

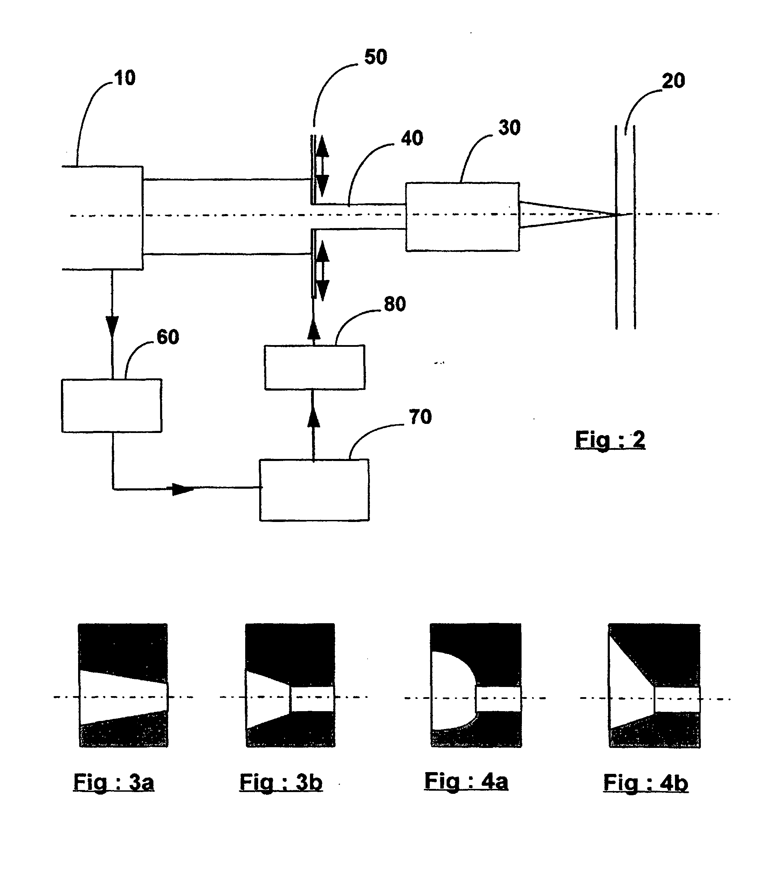

Le dispositif représenté sur la figure 2 comporte les mêmes moyens que le dispositif décrit en liaison avec la figure 1. En outre il comporte des moyens de commande du déplacement de l'écran ou de la déformation du diaphragme permettant respectivement de faire varier la position de l'écran et l'ouverture du diaphragme pendant l'usinage dans un plan perpendiculaire à l'axe du faisceau laser. Les moyens de commande comportent un dispositif de comptage 60 des impulsions délivrées par le laser excimère 10 relié à un dispositif de pilotage 70 destiné à commander des moyens mécaniques 80 de réglage des déplacements de l'écran ou de l'ouverture du diaphragme en fonction du nombre d'impulsions délivré par le laser excimère. Le déplacement de l'écran ou la déformation du diaphragme est réalisé en temps réel en fonction du temps ou du nombre d'impulsions délivré par le laser ce qui implique que des zones de la surface de la pièce mécanique sont éclairées par le faisceau laser pendant des durées différentes. La profondeur usinée par le faisceau laser en ces zones est alors fonction du temps d'éclairement de ces zones ou du nombre d'impulsions laser impactant ces zones. Le déplacement de l'écran ou la déformation du diaphragme permet d'obtenir des trous ou des formes à profil variable grâce à une variation de la tache focale obtenue lors de l'interaction du faisceau laser avec la pièce mécanique, de façon que la profondeur usinée dépende de la durée de cette interaction en chaque point de la surface de la pièce.

A titre d'exemple, il est possible de réaliser des trous dont la section diminue de façon monotone selon une loi préétablie tels que représentés sur les figures 3a et 3b

Pour faire varier la position de l'écran, l'écran peut par exemple être monté sur un chariot mobile dans le plan perpendiculaire à l'axe du faisceau laser. Le pilotage du chariot peut être effectué automatiquement, par exemple par un moteur pas à pas dont la rotation est indexée sur le nombre d'impulsions envoyé par le laser selon un programme préétabli par un ordinateur.

L'écran peut être remplacé par un diaphragme comportant des volets à ouverture variable. Dans ce cas, les moyens de commande du déplacement de l'écran sont remplacés par des moyens de commande de la déformation du diaphragme , lesdits moyens de commande pouvant agir de manière indépendante sur chaque volet. Les moyens de commande de la déformation du diaphragme comportent un dispositif de pilotage chargé de gérer l'ouverture ou la fermeture du diaphragme de façon à faire varier la section du faisceau laser et par suite la forme usinée.

La variation de la section du faisceau est effectuée automatiquement selon une loi de variation prédéterminée. La déformation du diaphragme est effectuée en temps réel pendant le perçage du trou. La fermeture progressive du diaphragme engendre des trous à profil variable, à section décroissante suivant leur profondeur, par exemple les trous peuvent être coniques ou de la forme d'un entonnoir. La section des trous peut être par exemple circulaire, carrée, polygonale ou autre, selon la forme du diaphragme.

Des exemples de trous obtenus avec un pilotage indépendant de plusieurs volets du diaphragme ou par déplacement d'un écran sont représentés sur les figures 4a et 4b.

Le dispositif de pilotage peut être réalisé par exemple par un moteur pas à pas dont la rotation est indexée sur le nombre d'impulsions envoyé par le laser, selon un programme préétabli, géré par un ordinateur et qui agit par l'intermédiaire d'un levier ou d'une bague de commande (non représenté) du diaphragme.

Ce dispositif d'usinage permet en outre, dans le cas de trous cylindriques, d'effectuer un calibrage du trou à réaliser en adaptant l'ouverture du diaphragme de manière à obtenir un trou cylindrique de diamètre plus faible que le diamètre souhaité puis, lorsque le trou a débouché, à ouvrir le diaphragme en fonction du nombre d'impulsions laser de façon à obtenir la section de trou souhaitée. Le calibrage permet d'améliorer la précision dimensionnelle du trou réalisé et d'éliminer la déposition de matière due à l'usinage sur les parois du trou.

## Revendications

1. Dispositif d'usinage par laser excimère d'un trou ou d'une forme à profil et à section variable dans une pièce mécanique, ce dispositif comprenant un laser excimère (10) qui délivre un faisceau sous forme d'impulsions, un dispositif de focalisation (30) dudit faisceau, et un écran (50) muni d'une ouverture prédéterminée, interposé entre le laser excimère (10) et le dispositif de focalisation (30), **caractérisé en ce que** l'écran (50) est mobile dans un plan perpendiculaire à la direction de propagation du faisceau laser, le dispositif comprenant aussi des moyens de commande pour déplacer l'écran (50) dans ledit plan, les déplacements de l'écran (50) étant effectués en temps réel pendant l'usinage du trou ou de la forme dans la pièce mécanique.

2. Dispositif d'usinage par laser excimère d'un trou ou d'une forme à profil et à section variable dans une pièce mécanique, ce dispositif comprenant un laser excimère (10) qui délivre un faisceau sous forme d'impulsions, un dispositif de focalisation (30) dudit faisceau, et un diaphragme (50) muni de volets à ouverture variable, interposé entre le laser excimère (10) et le dispositif de focalisation (30), **caractérisé en ce que** le dispositif comprend des moyens de commande pour ouvrir le diaphragme (50), ces moyens de commande agissant de manière indépendante sur chaque volet dudit diaphragme (50)

3. Dispositif d'usinage selon la revendication 2, **caractérisé en ce que** les moyens de commande de l'ouverture du diaphragme agissent automatiquement, en temps réel et pendant l'usinage du trou dans la pièce mécanique.

4. Dispositif d'usinage selon la revendication 3, **caractérisé en ce que** les moyens de commande de l'ouverture du diaphragme comportent un dispositif de comptage (60) des impulsions délivrées par laser excimère (10).

5. Dispositif d'usinage selon la revendication 4, **caractérisé en ce que** les moyens de commande de l'ouverture du diaphragme comportent en outre des moyens mécaniques (80) de réglage de la section d'ouverture du diaphragme et un dispositif de pilotage (70) destiné à commander les moyens mécaniques de réglage de l'ouverture du diaphragme en fonction du nombre d'impulsions délivré par le laser excimère.

6. Dispositif d'usinage selon la revendication 5, **caractérisé en ce que** le dispositif de pilotage comporte un moteur pas à pas ayant une vitesse de rotation indexée sur le nombre d'impulsions délivré par le laser excimère.

## Patentansprüche

1. Vorrichtung zur Bearbeitung eines Lochs oder einer Form mit Profil und veränderlichem Querschnitt in einem mechanischen Werkstück, wobei die Vorrichtung einen Excimer-Laser (10) aufweist, der einen impulsförmigenStrahl liefert, ferner eine Vorrichtung (30) zur Fokussierung des Strahls und einen mit einer vorbestimmten Öffnung versehenen Abschirmblende (50), die zwischen dem Excimer-Laser (10) und der Fokussierungsvorrichtung (30) angeordnet ist, **dadurch gekennzeichnet, daß** in einer zur Ausbreitungsrichtung des Laserstrahls senkrechten Ebene bewegbar ist und daß die Vorrichtung außerdem Betätigungsmittel zum Bewegen in der genannten Ebene aufweist, wobei die Verschiebungen der in Echtzeit während der Bearbeitung des Lochs oder der Form in dem mechanischen Werkstück durchgeführt werden.

2. Vorrichtung zur Bearbeitung eines Lochs oder einer Form mit Profil und veränderlichem Querschnitt in einem mechanischen Werkstück, wobei die Vorrichtung einen Excimer-Laser (10) aufweist, der einen impulsförmigen Strahl liefert, ferner eine Vorrichtung (30) zur Fokussierung des Strahls und eine mit Blendenschiebern mit variabler Öffnung ausgestattete Blende (50), die zwischen dem Excimer-Laser (10) und der Fokussierungsvorrichtung (30) angeordnet ist, **dadurch gekennzeichnet, daß** die Vorrichtung Betätigungsmittel zum Öffnen der Blende (50) aufweist, wobei diese Betätigungsmittel unabhängig auf jeden Blendenschieber der Blende (5) einwirken.

3. Bearbeitungsvorrichtung nach Anspruch 2, **dadurch gekennzeichnet, daß** die Betätigungsmittel zum Öffnen der Blende automatisch in Echtzeit und während der Bearbeitung des Lochs in dem mechanischen Werkstück wirksam sind.

4. Bearbeitungsvorrichtung nach Anspruch 3, **dadurch gekennzeichnet, daß** die Betätigungsmittel zum Öffnen der Blende eine Zählvorrichtung (60) zum Zählen der von dem Excimer-Laser (10) gelieferten Impulse aufweist.

5. Bearbeitungsvorrichtung nach Anspruch 4, **dadurch gekennzeichnet, daß** die Betätigungsmittel zum Öffnen der Blende außerdem mechanische Mittel (80) zum Einstellen des Öffnungsquerschnitts der Blende sowie eine Steuervorrichtung (70) umfassen, die zum Steuern der mechanischen Mittel (80) zum Einstellen des Öffnung der Blende in Abhängigkeit von der Zahl der von dem Excimer-Laser gelieferten impulse dient.

6. Bearbeitungsvorrichtung nach Anspruch 5, **dadurch gekennzeichnet, daß** die Steuervorrichtung einen Schrittmotor umfaßt, dessen Drehgeschwindigkeit mit der Zahl der von dem Excimer-Laser gelieferten Impulse verrastet ist.

## Claims

1. Device for the excimer laser machining of a hole or of a form of variable shape and variable cross section in a mechanical part, this device comprising an excimer laser (10) which delivers a beam in the form of pulses, a device (30) for focusing the said beam, and a screen (50) equipped with a predetermined opening, inserted between the excimer laser (10) and the focusing device (30), **characterized in that** the screen (50) can be moved in a plane perpendicular to the direction of propagation of the laser beam, the device also comprising control means for moving the screen (50) in the said plane, the movements of the screen (50) being performed in real time while the hole or the form is being machined in the mechanical part.

2. Device for the excimer laser machining of a hole or of a form of variable shape and variable cross section in a mechanical part, this device comprising an excimer laser (10) which delivers a beam in the form of pulses, a device (30) for focusing the said beam, and a diaphragm (50) equipped with shutters that open to a variable extent, inserted between the excimer laser (10) and the focusing device (30), **characterized in that** the device comprises control means for opening the diaphragm (50), these control means acting independently on each shutter of the said diaphragm (50).

3. Machining device according to Claim 2, **characterized in that** the means for controlling the opening of the diaphragm act automatically, in real time, and while the hole is being machined in the mechanical part.

4. Machining device according to Claim 3, **characterized in that** the means of controlling the opening of the diaphragm comprise a device (60) for counting the pulses delivered by the excimer laser (10).

5. Machining device according to Claim 4, **characterized in that** the means of controlling the opening of the diaphragm further comprise mechanical means (80) for setting the cross section of the opening of the diaphragm and a driving device (70) intended to operate the mechanical means of setting the opening of the diaphragm as a function of the number of pulses delivered by the excimer laser.

6. Machining device according to Claim 5, **characterized in that** the driving device comprises a stepping motor having a rotational speed indexed to the number of pulses delivered by the excimer laser.
